Europäisches Patentamt

European Patent Office

Office européen des brevets

(11) Veröffentlichungsnummer: **0 299 091**
**A1**

(12) **EUROPÄISCHE PATENTANMELDUNG**
Veröffentlicht nach Art. 158 Abs. 3 EPÜ

(21) Anmeldenummer: 88901481.7

(22) Anmeldetag: 07.01.88

Daten der zugrundeliegenden internationalen Anmeldung:

(86) Internationale Anmeldenummer:
PCT/SU88/00007

(87) Internationale Veröffentlichungsnummer:
WO88/05584 (28.07.88 88/17)

(51) Int. Cl.³: **G 08 G 1/095**

(30) Priorität: 19.01.87 SU 4183840
19.01.87 SU 4184103

(43) Veröffentlichungstag der Anmeldung:
18.01.89 Patentblatt 89/3

(84) Benannte Vertragsstaaten:
AT BE CH DE FR GB IT LI LU NL SE

(71) Anmelder: NAUCHNO-PROIZVODSTEVENNOE
OBIEDINENIE PO AVTOELEKTRONIKE I
AVTOTRAKTORNOMU ELEKTROOBORUDOVANIJU
ul. Kirpichnaya, 49-41
Moscow, 105275(SU)

(72) Erfinder: RESHETIN, Evgeny Fedorovich
5 ul. Sokolinoi gory, 19-96
Moscow, 105275(SU)

(74) Vertreter: Patentanwälte Beetz sen. - Beetz jun. Timpe -
Siegfried - Schmitt-Fumian- Mayr
Steinsdorfstrasse 10
D-8000 München 22(DE)

(54) LEUCHTSIGNALANORDNUNG.

(57) Das Antiphantom-Lichtsignalgerät enthält einen Kollimator mit einem Reflektor (2), eine Lichtquelle (1), die sich im Brennpunkt (F) des Kollimators befindet, sowie einen Lichtstrahlenabsorber (3). Der Reflektor (2) und der Absorber (3) sind gegenseitig auf eine solche Weise angeordnet, daß jeder Brennstrahl (4), der entgegengesetzt zu einem auf den Reflektor (2) einfallenden Brennstrahl (5) gerichtet ist, auf den Absorber (3) einfällt. Der Reflektor (2) kann also ein Spiegel bzw. in Gestalt von katadioptrischen Ringen (23) mit Totalreflexion ausgeführt sein. Diese Konstruktion schließt falsche Außenbelichtungssignale aus und erhöht den Lichtsignalkontrast zu heller Tageszeit.

LICHTSIGNALGERÄT

Technisches Gebiet

Die Erfindung bezieht sich auf die Lichttechnik, genauer auf Lichtsignalgerät.

Am effektivsten kann die vorliegende Erfindung in Lichtsignalgeräten gerichteter Wirkung angewendet werden, die unter Bedingungen einer Außenbelichtung (Sonnen- und Himmelslicht u.ä.) funktionieren, d.h. in den Verkehrssignallichtern, insbesondere in den Kfz.-Fahrtrichtungsanzeigern und Bremslichtern, sowie in den Verkehrsampeln und Eisenbahnlichtsignalen.

Zu einem weiteren möglichen Einsatzgebiet der vorliegenden Erfindung gehören Lichtanzeiger verschiedener Zweckbestimmung.

Die Sichtbarkeit, Erkennbarkeit von Lichtsignalen zu der Tageszeit, d.h. die Wahrscheinlichkeit einer fehlerfreien und raschen Feststellung, ob ein Signallicht (beispielsweise eine Verkehrsampel) brennt, hängt nicht nur von seiner eigenen Lichtstärke, sondern auch vom Niveau der Außenbelichtung ab, die Lichtstellen von seinen optischen Teilen erzeugt, welche den Signalkontrast herabsetzen und vom Beobachter sogar als falsche Signale ("Phantom-Effekt") aufgenommen werden. Die Lichtstellen sind in beliebigen Richtungen möglich, doch besonders nachteilig ist der Phantom-Effekt in den informationell bedeutsamen Richtungen (entlang der Eigenstrahlungsachse und in den zu dieser Achse nahen Richtungen). In den stationären Lichtsignaleinrichtungen (Verkehrsampeln, Eisenbahnlichtsignale) sind zur Bekämpfung des Phantom-Effektes Lichtschutzschirme verwendet, die bei niedriger Sonnenlage wenig effektiv sind und die Abmessungen der Einrichtung vergrößern. In den Verkehrssignallichtern, wo die Anwendung von Lichtschutzschirmen erschwert ist, wird der erforderliche Kontrastgrad dank einer relativ hohen Lichtstärke erreicht. Die Zunahme der Anforderungen an die Verkehrssicherheit bewirkt die Einführung von erhöhten Normen für die Lichtstärke der Signallichter, was aber dazu führt, daß diese Lichter zu dunkler Tageszeit blendend wirken. Zur Zeit sind optische Schaltungen bekannt, wo der Phantom-Effekt durch recht

- 2 -

kostspielige (bei der Massenproduktion) Mittel beseitigt ist, was deren allgemeine Anwendung verhindert.

Zugrundeliegender Stand der Technik

Es ist ein Kontrast-Lichtsignalgerät bekannt (GB,A, 1591013), das einen Konkavreflektor mit einer Lichtguelle in dessen Brennpunkt enthält. Zur Beseitigung des Phantomeffektes ist die Austrittsöffnung des Reflektors von einem lichtabsorbierenden Schirm mit feinen Löchern verdeckt, über welche die Nutzstrahlung des Gerätes mit Hilfe von Linsenrastern erfolgt.

Die Inee eines lichtabsorbierenden Schirmes mit lichtleitenden Löchern liegt auch vielen späteren Erfindungen (SU-A Nr. 1173128) zugrunde, aber für ihre praktische Anwendung muß man einige technologische Schwierigkeiten überwinden, die mit der Herstellung von gelochten Schirmen und Rastern zusammenhängen.

Der Konkavflektor des Lichtsignalgerätes kann sowohl ein Spiegelreflektor wie auch ein katadioptrischer Reflektor, d.h. aus einem transparenten Material in Gestalt von prismatischen Elementen mit Totalreflexion ausgeführt sein (GB-A Nr. 2069124). Die katadioptrischen Reflektoren setzen bei deren Anwendung in den Lichtsignaleinrichtungen wie auch die Spiegelreflektoren die Durchführung von besonderen Maßnahmen gegen die Außenbelichtung voraus.

Der angemeldeten Lösung am nächsten kommt nach seinem technischen Wesen ein Lichtsignalgerät gerichteter Wirkung, und zwar eine Verkehrsampel (Ju. A. Kremenetz, M.P. Pechersky "Tekhnicheskie sredstva regulirovania dorozhnogo dvizhenia" /"Technische Mittel für die Straßenverkehrsregulung"/, 1981, Verlag "Transport", Moskau, SS. 77-81), das einen paraboloidischen Konkavreflektor (Kollimator) mit einer Lichtquelle in dessen Brennpunkt sowie einen Außenbelichtungsstrahlenabsorber in Form schwarzer Platten enthält, die in den meridionalen Kollimatorebenen liegen ("Antiphantom-Kreuz"). Diese Platten besitzen grundsätzlich unbeseitigbare Schlitze zur Unterbringung einer Lichtquelle, durch welche die Außenbelichtungsstrahlen in der Nähe des Kollimatorbrennpunktes hindurchgehen und, nachdem sie vom paraboloidischen Spiegel zurückgestrahlt wurden, entlang der Kollimatorachse gemeinsam mit den Nutzstrahlen des Gerätes abgestrahlt werden. Somit ist das erwähnte Lichtsignalgerät, indem es die Lichtstellen der Außenbelichtung in den seitlichen Richtungen beseitigt, gegen die Außenbelichtung in den informationell äußerst bedeutsamen, der Gerätachse nahen Richtungen praktisch nicht geschützt.

Offenbarung der Erfindung

Der vorliegenden Erfindung liegt die Aufgabe zugrunde, ein solches Lichtsignalgerät zu schaffen, in dem der Reflektor und der Lichtstrahlenabsorber auf eine solche Weise ausgeführt und relativ zueinander angeordnet wären, daß bei einer beliebigen Lage der Außenbelichtungsquellen eine vollkommene Beseitigung der von diesen Quellen bedingten Lichtstellen in der Richtung der Beobachtungsachse gewährleistet wäre.

Die gestellte Aufgabe wird dadurch gelöst, daß in einem Lichtsignalgerät, das einen Kollimator mit Reflektor, eine im Brennpunkt des Kollimators angeordnete Lichtquelle, sowie einen Lichtstrahlenabsorber enthält, erfindungsgemäß die Absorberoberfläche einen Teil der Brennstrahlen des Kollimators schneidet, wobei der Reflektor und der Absorber auf eine solche Weise gegenseitig angeordnet sind, daß ein beliebiger Brennstrahl, der entgegengesetzt zum auf den Reflektor einfallenden Brennstrahl gerichtet ist, auf den Absorber einfällt.

Die erfindungsgemäß vorgeschlagene Konstruktion des Lichtsignalgerätes gestattet es, den Phantom-Effekt zu beseitigen und die Lichtstellen der Außenbelichtung in den axialen Strahlungsrichtungen unabhängig von der Außenbelichtungsrichtung zu unterdrücken. Dies wird dadurch erreicht, daß in der Richtung des auf den Reflektor des Kollimators einfallenden (und nach der Rückstrahlung entlang der Achse desselben laufenden) Strahls sich nur die Nutzstrahlung des Gerätes ausbreiten kann, weil auf der optisch-geometrischen Linie dieser Ausbreitung nur die eigene Strahlungsquelle des Geräts liegt, während sich im Wege der eventuell möglichen Ausbreitung der Außenbelichtungsstrahlen in der gleichen Richtung ein entsprechender Absorberabschnitt befindet.

Gemäß einer der Ausführungsformen der Erfindung ist der Reflektor in Gestalt eines Konkavspiegels ausgebildet, wobei der Spiegel und der Absorber eine Oberfläche bilden, welche die Lichtquelle von der Seite her umfaßt, die zur Lichtöffnung des Gerätes entgegengesetzt liegt.

Bei dieser Ausführungsform ist die Konstruktion des Gerätes am einfachsten, weil die Ausbildung des Absorbers und Reflektors in Gestalt einer gemeinsamen, die Lichtquelle umfassenden Oberfläche gestattet, sie mit der Innenfläche des Gerätgehäuses zu vereinigen.

In einer weiteren Ausführungsform der Erfindung ist der Konkavspiegel durch die Lichtöffnung des Gerätes und eine Ebene begrenzt, die die Kollimatorachse vor dem Kollimatorbrennpunkt unter einem beliebigen Winkel schneidet, wobei zumindest der an die Ebene anschließende Spiegelteil ein parabolisches, mit dem Kollimator konfokales Profil besitzt, während die Ebene in einem Abstand vom Brennpunkt liegt, der nach einer folgenden Formel ermittelt wird:

$$V \geq g \cdot \sin \xi \,,$$

wo es bedeutet:

V - Abstand zwischen Brennpunkt und Ebene;

g - maximaler Abstand vom Brennpunkt bis zu der Linie, die die Oberflächen des Spiegels und Absorbers trennt;

$\xi$ - Nutzstreuwinkel des Gerätes.

In dieser Ausführungsform der Erfindung kann der Phantom-Effekt nicht nur im axialen, sondern auch in einem beliebigen vorbestimmten Signalbeobachtungsbereich beseitigt werden, der beispielsweise mit dem Nutzstreuwinkel des Gerätes zusammenfällt. Dies wird dadurch gewährleistet, daß für einen beliebig gewählten Punkt am Reflektor der ihm entsprechende Absorberabschnitt ausreichend große (durch den Abstand der Schnittebene vom Brennpunkt bedingte) Winkelabmessungen besitzt.

In der vorzugsweisen Ausführungsform der Erfindung schneidet die Ebene die Lichtöffnung des Gerätes, wobei der Vorderteil des Absorbers in Richtung der reflektieren- den Spiegeloberfläche konkav ist und seitens der Lichtöffnung die Innenfläche des Absorbers verdeckt.

Die Konstruktion des Gerätes gewährleistet in dieser Ausführungsform verschiedene Gestaltungsmöglichkeiten beim Ausführen einer Signallaterne am stromlinienförmigen Aufbau eines Verkehrsmittels. Das Gerät ist bei der Entwicklung einer Signallichteinheit (beispielsweise eines Fahrtrichtungsanzeigers) mit anderen Lichtgeräten (beispielsweise mit einem Kfz.-Scheinwerfer) besonders nützlich, weil es die Kompaktheit der einzelnen Bestandteile dieser Einheit gewährleistet.

Möglich       ist ferner eine Ausführungsform, bei der der Spiegel aus durch einzelne Absorberabschnitte getrennten Teilen zusammengesetzt ist, deren Oberflächen durch die Lichtöffnung des Gerätes und die meridionalen Ebenen begrenzt sind.

Das Gerät besitzt in dieser Ausführungsform eine profilierte informationell bedeutsame Konfiguration der Lichtöffnung und kann in den Lichtanzeigern spezieller Zweckbestimmung angewendet werden.

Besonders zweckmäßig ist, den Reflektor in Gestalt eines Konkavspiegels auszuführen, der hinter der Brennebene des Kollimators liegt, während der Absorber aus zwei einzelnen Teilen besteht: einem Außenteil, der die Form einer abgeschittenen kegeligen Fläche besitzt, welche an den Vorderrand des Reflektors anschließt und sich gegen die Lichtöffnung des Gerätes hin unter einem den Nutzstreuwinkel nicht übersteigenden Winkel verbreitert, sowie einem Innenteil, der die Form eines Bechers besitzt, der die Lichtquelle von der Seite der Lichtöffnung des Gerätes her umfaßt.

Das Gerät gewährleistet in dieser Ausführungsform dank einer geringen Reflektortiefe mit einem Umfassungswinkel von bis 180° minimale axiale Abmessungen bei maximaler (für die Antiphantom-Lichtgeräte) Ausnutzung des von der Lichtquelle gelieferten Lichtstroms.

Die Austrittsöffnung des Kollimators kann durch ein Schutzglas - ein Lichtfilter - verdeckt sein, dessen Oberfläche durch Drehung eines Parabelzweiges um die Gerätachse gebildet ist, wobei die Parabelachse über die Erzeugende des kegeligen Absorberteiles verläuft, während der Brennpunkt und der Pol der Parabel jeweils am vorderen bzw. hinteren Rand des kegeligen Absorbers liegen.

Diese Ausführungsform gewährleistet eine maximal vollständige Vermeidung des Phantom-Effektes sowie einen besten Kontrast der Lichtsignale in einem streng begrenzten Bereich der Beobachtungsrichtungen, weil in diesem Bereich die Lichtstellen der Außenbelichtung nicht nur vom Reflektor, sondern auch vom Schutzglas beseitigt werden. Diese Ausführungsform wird zweckmäßigerweise in den Lichtsignalen bzw. Verkehrsampeln großer Reichweite angewendet.

In einer weiteren Ausführungsform der Erfindung ist der Reflektor aus einem transparenten Werkstoff in Form einer Totalreflexionsfläche ausgebildet, wobei die Absorberoberfläche die Lichtquelle und die reflektierende Oberfläche von der Seite her umfaßt, die zur Lichtöffnung des Gerätes entgegengesetzt ist.

In dieser Ausführungsform der Erfindung erfüllt der Reflektor auch die Funktionen eines Lichtfilters, weil er aus einem Werkstoff hergestellt werden kann, der in der Farbe des jeweiligen Signals gefärbt ist. Darüber hinaus entfällt die Notwendigkeit der Auftragung einer Spiegelschicht auf den Reflektor.

Der Reflektor kann in Form von katadioptrischen Ringen ausgeführt sein, von denen ein jeder das Profil eines Prismenkeils besitzt, das eine lichtbrechende Eintrittsfläche, eine Brennstrahl-Totalreflexionsfläche sowie eine lichtbrechende Austrittsfläche aufweist, wobei die Ringe der Brennebene des Kollimators vorgelagert sind und ein solches Profil haben, daß ein optisch-geometrischer Strahl, der zwei diametral entgegengesetzte Punkte der reflektierenden Oberfläche ein und desselben Ringes verbindet, diese Oberfläche unter einem Winkel schneidet, der kleiner als der Totalreflexionswinkel ist.

In dieser Ausführungsform des Gerätes werden die Lichtstellen der Außenbelichtung nicht nur in den axialen, sondern auch in den seitlichen Beobachtungsrichtungen unterdrückt, weil die Reflektoroberfläche in diesen Richtungen das Licht auf das schwarze Gerätgehäuse hindurchleuchten läßt. Dies gestattet, ein solches Schema in den Lichtsignalgeräten mit einem weiten Beobachtungswinkelbereich anzuwenden, so beispielsweise in den Lichtsignalen bzw. Verkehrsampeln sowohl großer wie auch kleiner Reichweite.

Gemäß einer der Ausführungsformen der Erfindung sind die katadioptrischen Ringe auf einer paraboloidischen Tragschicht ausgebildet, wobei die reflektierende Oberfläche eines jeden Ringes mit dessen Ein- und Austrittsflächen einen Winkel $V$ bildet, der aus den folgenden Formeln ermittelt werden kann:

$$V = \text{arctg} \frac{1 - \cos \lambda}{\sqrt{n^2 - 1} - \sin \lambda} \quad ,$$

$$\lambda = 45° - \text{arctg} \frac{1 - \sin \varphi}{2 - \cos \varphi} \quad ,$$

wo $\varphi$ den Winkel zwischen der Kollimatorachse und dem auf den jeweiligen Ring einfallenden Brennstrahl bedeutet.

In dieser Ausführungsform der Erfindung sind die den Reflektor bildenden katadioptrischen Ringe auf einer gemeinsamen Tragschicht ausgebildet, was den Reflektor als ein ganzgepreßtes Teil herzustellen erlaubt, wodurch die Fertigungsgerechtheit des Gerätes gewährleistet wird.

In sehr zweckmäßiger Weise schließt der Kollimator eine der Brennebene vorgelagerte ringförmige Sammellinse ein, deren Kreissymmetrieachse über die Kollimatorachse verläuft, wobei die optische Achse ihres Profils durch den gemeinsamen Brennpunkt des Kollimators und dieser Linse unter einem spitzen Winkel zur Kollimatorachse geht und die Ausgangsapertur der Linse mit der Eingangsapertur des Reflektors übereinstimmt, dessen katadioptrische Ringe auf der kegeligen Tragschicht ausgeführt sind, die sich in Richtung der Austrittsöffnung des Kollimators hin verbreitert und eine blinde Öffnung besitzt, deren Durchmesser nicht kleiner als der maximale Durchmesser der ringförmi-

- 8 -

gen Linse ist, während der Winkel $\nu$ zwischen der reflektierenden Oberfläche und den Eintrittsflächen der katadioptrischen Ringe mit Hilfe einer folgenden Formel gewählt wird:

$$\text{tg } \nu = \frac{1 - \cos(\varphi - \varphi')}{\sqrt{n^2 - 1} - \sin(\varphi - \varphi')} \quad ,$$

wo es bedeutet:

$\varphi'$ - Kegelwinkel der reflektierenden Oberfläche;

$\varphi$ - Winkel zwischen der Kollimatorachse und der optischen Achse des Ringlinsenprofils;

n - Brechungsindex des Reflektorwerkstoffs.

In dieser Ausführungsform des Geräts besitzen die katadioptrischen Ringe ein gleiches Profil, was das Entwerfen und Berechnen des optischen Schemas des Gerätes sowie die Herstellung des Preßwerkzeuges für den ganzgepreßten Reflektor vereinfacht.

Gemäß einer der Ausführungsformen der Erfindung ist die blinde Reflektoröffnung von der Seite der Austrittsöffnung des Kollimators her durch eine scheibenförmige Sammellinse verdeckt, wobei die Verbindungsflächen der Ringe derselben der Kollimatorachse parallel sind.

Dank der Anwendung einer zusätzlichen Linse im Kollimator, die die blinde Reflektoröffnung verdeckt, wird die Helligkeitsverteilung an der Austrittsöffnung des Gerätes verbessert, weil ein dunkler Fleck in deren Zentrum beseitigt, der Wirkungsgrad aber erhöht wird. Die Lichtstellen von den Verbindungsflächen der Fresnel-Ringe der erwähnten Linse sind zumindest in den axialen Richtungen ausgeschlossen.

Die aus einem transparenten Werkstoff gefertigten Kollimatorteile können meridionale Schlitze aufweisen, die mit einem schwarzen Farbstoff gefüllt sind.

Die in den meridionalen Ebenen liegenden zusätzlichen lichtabsorbierenden Abschnitte tragen zur vollkommenen Beseitigung der Lichtstellen der Außenbelichtung in den seitlichen Richtungen dank dem erfolgenden Absorbieren von außermeridionalen Strahlen bei. Die Anwendung der schlitzförmig ausgebildeten lichtabsorbierenden Abschnitte vereinfacht die Konstruktion, weil diese absorbierenden Abschnitte nicht als selbständige Teile ausgeführt sind.

Darüber hinaus ist es zweckmäßig, daß der Kegelwinkel der reflektierenden Reflektoroberfläche zweimal so klein wie der Winkel zwischen der Kollimatorachse und der optischen Achse des Ringlinsenprofils und zweimal so groß wie der Winkel zwischen der reflektierenden Oberfläche und den lichtbrechenden Flächen der katadioptrischen Ringe wäre.

In diesem Fall wird bei minimalem Werkstoffaufwand für den katadioptrischen kegeligen Reflektor, bedingt durch eine gleichbleibende Tragschichtstärke, ein relativ hoher Wirkungsgrad gewährleistet, der dank der Verwertung der Fresnel-Rückstrahlung des von der Gerätquelle gelieferten Lichtes von den Austrittsflächen der katadioptrischen Ringe zustande kommt.

Gemäß einer weiteren Ausführungsform der Erfindung sind die Austrittsflächen der katadioptrischen Ringe des Reflektors der optischen Achse des Ringlinsenprofils parallel, wobei die Stärke der Reflektortragschicht und die Breite der lichtbrechenden Flächen der Katadioptrischen Ringe in Richtung der Austrittsöffnung des Kollimators abnehmen.

In dieser Ausführungsform der Erfindung wird dank Vermeidung von Lichtverlusten zwischen den Eintrittsflächen der katadioptrischen Ringe des Gerätes eine maximale Verwertung des von der Lichtquelle gelieferten Lichtstromes, d.h. ein maximaler Wirkungsgrad des Gerätes mit einem katatioptrischen kegeligen Reflektor erzielt.

Kurze Beschreibung der Zeichnungen

Weitere Ziele und Vorteile der vorliegenden Erfindung sind aus der nachfolgenden eingehenden Beschreibung von Ausführungsbeispielen derselben sowie aus beigefügten Zeichnungen begreifbar; in den Zeichnungen zeigt:

Fig. 1 eine Variante des Prinzipschemas des Gerätes mit einem Spiegelreflektor, das die Hauptprinzipien seines Aufbaus und seiner Funktion erläutert;

Fig. 2,3 - Schema eines Verkehrslichtes (jeweils Axialschnitt und Ansicht im Plan) mit stromlinienförmiger Gehäusekonfiguration;

Fig. 4, 5 ein Schema eines Lichtanzeigers (jeweils Axialschnitt und Ansicht im Plan), der eine informationsrelevante Form der Lichtöffnung besitzt;

Fig. 6 einen Signalscheinwerfer mit einem klar bestimmten Bereich von Beobachtungsrichtungen, die von den Lichtstellen der Außenbelichtung frei sind;

Fig. 7 ein Schema des Gerätes mit einem paraboloidischen katadioptrischen Reflektor;

Fig. 8 ein Prinzipschema, das den Strahlengang im katadioptrischen Reflektor erläutert;

Fig. 9 eine Ausführungsform von meridionalen lichtabsorbierenden Elementen in Form von schwarzen Schlitzen im Körper des katadioptrischen Reflektors;

Fig. 10 ein Schema eines Signallichtes mit einer ringförmigen Linse und einem kegeligen katadioptrischen Reflektor;

Fig. 11 ein Schema des Kollimators mit einem katadioptrischen Reflektor mit veränderlicher Tragschichtstärke.

Beste Ausführungsvariante der Erfindung

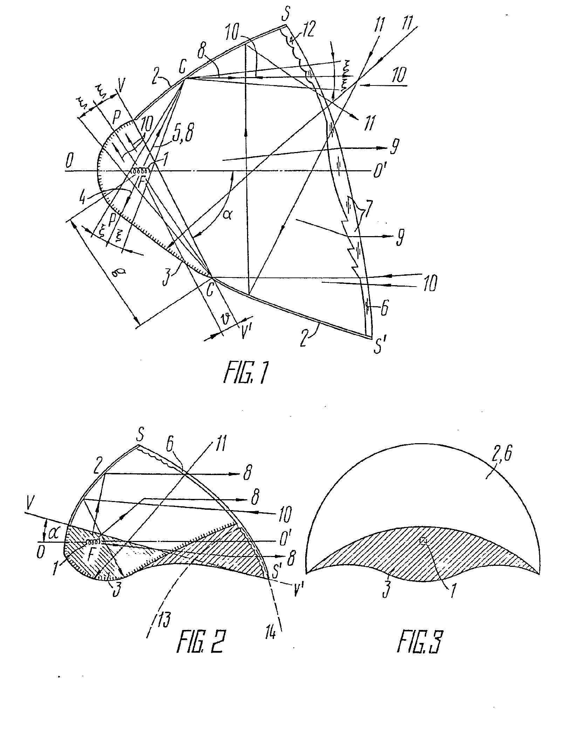

Das Lichtsignalgerät (Fig. 1) enthält eine Lichtquelle 1 (Glühfaden einer elektrischen Lampe), die sich im Brennpunkt F des Kollimators mit einer Achse OO′ (sie ist zugleich die Gerätachse) befindet, der in Gestalt eines Reflektors 2 ausgeführt ist, sowie einen Lichtstrahlenabsorber 3. Der Absorber 3 ist als eine schwarze lichtabsorierende Oberfläche ausgeführt, die außerhalb der meridionalen Ebene unter einem Winkel zu den Brennstrahlen (d.h. den aus dem Brennpunkt F ausgehenden Strahlen) verläuft, indem sie einen Teil des Flusses derselben schneidet, und eine solche Form sowie solche Abmessungen besitzt, daß jeder beliebige Brennstrahl 4, der entgegengesetzt einem Brennstrahl 5 gerichtet ist, welcher auf die Arbeitsfläche des Reflektors 2 einfällt, auf die Oberfläche des Absorbers 3 fällt. Anders gesagt, ist für einen jeden Punkt C des Reflektors 2 auf der Oberfläche des Absorbers 3 ein ent-

- 11 -

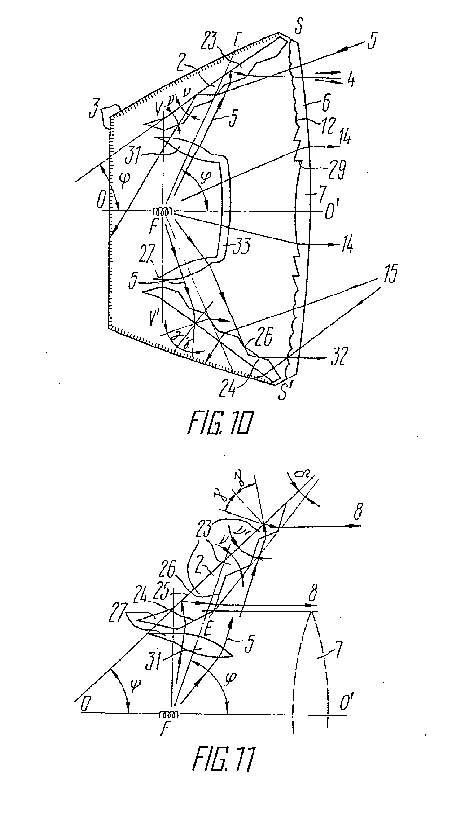

sprechender Punkt P vorhanden, und zwar ein solcher, daß die Strahlen FC und FP entgegengesetzt gerichtet sind (es kann nicht gesagt werden, daß die Linie CP stets eine Gerade ist, weil bei Vorhandensein von optisch aktiven Körpern, beispielsweise einer Linse zwischen der Lichtquelle 1 und dem Reflektor 2, wie dies in Fig. 8 dargestellt ist, die Strahlen ihre Richtung wechseln können).

In der Ausführungsform gemäß Fig. 1 ist diese Bedingung dadurch erfüllt, daß der Reflektor 2 und der Absorber 3 eine einheitliche Oberfläche über die Innenfläche des Gehäuses bilden, die die Quelle 1 von der Seite her umfaßt, die der Lichtöffnung SS' des Gerätes entgegengesetzt ist, wobei die gesamte reflektierende Oberfläche als ein Teil des Spiegelrotationsparaboloids mit der Achse OO' und einem Brennpunkt F ausgeführt, von der Lichtöffnung SS' des Gerätes (der Eintrittsöffnung des Kollimators) und dem Schnitt des Paraboloids begrenzt ist, der durch Schneiden desselben mit einer Ebene VV' entstanden ist, welche die Kollimatorachse OO' vor dem Brennpunkt F unter einem beliebig gewählten Winkel $\alpha$ ($0 < \alpha \leqslant 90^\circ$), beispielsweise $\alpha = 60^\circ$, schneidet. Die Lichtöffnung SS' ist von einem Schutzglas 6 verdeckt, das gleichzeitig die Funktionen eines Lichtfilters erfüllt, dessen zentraler Teil in Gestalt einer Sammellinse 7 ausgeführt sein kann, die die blinde Kollimatoröffnung verdeckt, welche durch Abschneiden der Spitze des Paraboloidspiegels 2 durch die Ebene VV' entstanden ist.

Das Gerät arbeitet auf die folgende Weise. Die Lichtstrahlen 8, die von der Quelle 1 ausgestrahlt werden und auf den Reflektor 2 einfallen, werden reflektiert und durch eine Lichtöffnung SS' hindurch (unter Gewinnung der jeweils erforderlichen Farbe dank dem Durchgang durch das Lichtfilter 6) entlang der Kollimatorachse OO' (die informationell bedeutsamste Richtung ) als Nutzlichtsignal ausgestrahlt. Ein Teil des Signallichtstromes wird von Strahlen 9 der Quelle 1 nach Brechung derselben durch die Linse 7 erzeugt. Dadurch wird ein dunkler Fleck im Zentrum der Lichtöffnung SS' beseitigt. Die Außenbelichtungsstrahlen 10

- 12 -

(beispielsweise von den Kfz.-Scheinwerfern), die entlang der Achse OO' auf den Reflektor einfallen, werden gemäß dem Gesetz der Umkehrbarkeit des optisch-geometrischen Strahlenganges von ihm in Richtung des Brennpunktes F reflektiert und entweder von der Quelle 1 (vom Glühfaden) oder von dem Abschnitt des Absorbers 3 absorbiert, der hinter der Lichtquelle gegenüber dem Rückstrahlungspunkt des Strahls 10 liegt. Die Außenbelichtungsstrahlen 11, die auf den Reflektor 2 unter einem Winkel zur Achse OO' (beispielsweise Strahlen des Sonnen- bzw. Himmellichtes) gelangen, werden ebenfalls entweder auf den Absorber 3 reflektiert oder treten nach einer Reihe von Innenreflexionen im Gerät durch dessen Lichtöffnung SS' unter einem Winkel zur Signalausstrahlungsachse OO' (und zur Signalbeobachtungsachse OO') aus. Die Unmöglichkeit der Entstehung von Lichtstellen durch die Außenbelichtung vom Reflektor 2 in Richtung der Gerätachse kann man nach dem Prinzip des apagogischen Beweises klarmachen. Angenommen, ein gewisser Strahl 11 von einer externen Quelle tritt nach einer beliebigen Zahl von Reflexionen aus einem Punkt C des Reflektors 2 nicht unter einem Winkel zur Achse OO', sondern parallel zu ihr aus; dann tritt der zu ihm rückwärts gerichtete Strahl nach derselben Reflexionenzahl in der umgekehrten Reihenfolge durch die Lichtöffnung SS' (auf die externe Quelle des Strahls 11) aus, doch kann das nicht sein, weil ein jeder Strahl, der in den Punkt C des Reflektors 2 von außen parallel zur Achse OO' einfällt, in Richtung des Brennpunktes F reflektiert und im entsprechenden Punkt P des Absorbers 3 absorbiert wird. In dieser Weise ist die Hauptbeobachtungsrichtung für die Signale des Geräts entlang der Ausstrahlungsachse OO' derselben gegen die durch die Außenbelichtung bedingten Lichtstellen geschützt, unabhängig von der Größe des Winkels, unter dem die Außenquellen den Reflektor 2 bestrahlen. Die Entstehung von solchen Lichtstellen ist nur bei einer winkelmäßigen Abweichung der Signalbeobachtungslinie von der Achse OO' möglich. Bei geringer Abweichung entstehen sie von den Zonen des Reflektors 2, die an die blinde Öffnung desselben an-

- 13 -

liegen. Die Sammellinse 7 lenkt einen erheblichen Teil der Lichtstellen von der Achse OO', aber bei hoher optischer Kraft nimmt die Wahrscheinlichkeit der Entstehung der Lichtstellen von der Linse selber zu.

Informationell bedeutsam ist für die meisten Lichtsignalgeräte nicht nur die Richtung entlang der Achse OO', sondern auch die Richtungen in einem gewissen Bereich von Winkeln zur Ausstrahlungsachse. Man kann ihn als dem Nutzstreuwinkel $\xi$ des Gerätes gleich ansehen. Die Vermeidung von falschen Signalen, die durch die Belichtung im gesamten Winkelbereich $\xi$ erzeugt werden, wird mittels der Vergrößerung des Umfassungswinkels der absorbierenden Oberfläche 3 aufgrund einer Verringerung der reflektierenden Oberfläche erreicht, so daß gegenüber einem beliebig gewählten Punkt C des Reflektors 2 (darunter auch jenem am Rand der blinden Öffnung) der den jeweiligen Punkt P einschließende Abschnitt des Absorbers 3 endliche, in bezug auf den Punkt C ausreichend große Winkelabmessungen besitzt, die zu verschiedenen Seiten von der Linie CP nicht kleiner als $\xi$ sind. Im Gerät gemäß Fig. 1 liegt die Schnittebene VV' zu diesem Zweck in einem Abstand V vom Brennpunkt F, welcher Abstand V nach einer folgenden Formel ermittelt wird;

$$V \geqq g \cdot \sin \xi$$

(1)

wo g den Abstand vom Brennpunkt F bis zum am meisten entfernten Punkt einer die reflektierende und die absorbierende Oberflächen trennenden Kurve bedeutet.

Die erforderliche Erweiterung des Nutzstrahlungsstreuwinkels (bis zum Betrag $\xi$ ) wird im Falle eines idealen Paraboloids entweder durch endliche Abmessungen des Glühfadens 1 oder durch eine Verkleinerung der optischen Kraft der Linse 7 oder aber durch am Schutzglas 6 bzw. am Reflektor 2 selber vorgesehene lichtstreuende Elemente 12 gewährleistet. Im letzteren Fall kann der Betrag von V bis auf einen Wert von nicht mehr als $V' = g \cdot \sin ( \xi + \xi' )$ erhöht werden, wo $\xi'$ den Streuwinkel an den Elementen 12 je nach der Lage derselben bedeutet. Die Streuung inner-

halb des Winkels $\xi$ kann auch durch Abweichung der Oberfläche des Spiegelreflektors 2 vom exakten Paraboloid erreicht werden, wozu sein meridionales Profil Abschnitte einschließen soll, die von der mit dem Gerät konfokalen Parabel um einen Winkelbetrag in der Größenordnung von $\frac{\xi}{2}$ abweichen. Wenn das Parabelprofil in der Nähe der Ebene VV' gestört ist, kann der Betrag von V größer oder kleiner als der in der Formel (1) angegebene Wert sein.

Unter Beachtung des erforderlichen Streuwinkels gewinnt die Funktion des Gerätes folgende Besonderheiten. Die von der Quelle 1 emittierten Strahlen 8 und 9 werden vom Kollimator innerhalb des Nutzstreuwinkels $\xi$ entlang der Achse OO' ausgestrahlt. Die Außenbelichtungsstrahlen 10, die auf einen beliebig gewählten Punkt C des Gerätsreflektors innerhalb des Winkels $\xi$ einfallen, werden in der Umgebung eines entsprechenden Punktes P des Absorbers 3 absorbiert. Die Strahlen 11 von externen Quellen, die in bezug auf die Achse OO' unter einem größeren als $\xi$ Winkel laufen, können nach einer Reihe von Reflexionen das Auftreffen auf den Absorber 3 vermeiden, aber ihre Lichtstellen sind unter Winkeln gerichtet, die den Betrag $\xi$ übersteigen. Also kann das vorgeschlagene Gerätschema für einen beliebigen vorbestimmten Bereich von informationell bedeutsamen Richtungen derart ausgelegt sein, daß es die Unterdrückung der durch die Außenbelichtung bedingten Lichtstellen in diesen Richtungen stets gewährleisten wird, unabhängig davon, wie verschieden die Außenbelichtungsquellen in bezug auf die Gerätachse OO'' angeordnet wären.

Der Winkel $\alpha$ zwischen der Achse OO' und der Schnittebene VV' kann beliebig klein (und sogar gleich Null) sein, verschieden kann auch die Lage der Lichtöffnung SS' und die Form des Schutzglases 6 sein, so daß das Schneiden der Ebene VV' mit der Oberfläche der Lichtöffnung des Gerätes möglich ist. d.h. die Lichtöffnung SS' kann teilweise an den Reflektor 2, teilweise an den Absorber 3 angrenzen. Diese Variante ist im axialen Schnitt und in der Voderansicht in Fig. 2 und 3 jeweils dargestellt. Die blinde Öffnung im Reflektor 2 (d. h. der innere Teil des Absorbers 3, der entlang der Achse OO' sichtbar ist) wird in diesem Fall zweckmäßigerweise nicht von einer Linse, sondern vom vorderen, gegen die reflektierende Oberfläche eingebogenen Teil des Absorbers 3 verdeckt, was die Laternenabmessungen zu verringern erlaubt, wobei die Lichtöffnung SS' (Fig. 3) eine originelle sichelförmige Gestalt bekommt. Eine verschiedene Neigung der Schnittebene VV' bei verschiedenen Neigungen und Form der Lichtöffnung SS' gewährleistet breite Gestaltungsmöglichkeiten beim Entwerfen von Signallichtern stromlinienförmiger Ausbildung, die zum Befestigen an kompliziert geformten Teilen von Verkehrsmittelaufbauen bestimmt sind. So ist beispielsweise das Schema von Fig. 2, 3 beim Eintwerfen des vorderen Fahrtrichtungsanzeigers in einer gemeinsamen Einheit mit dem Kfz.-Scheinwerfer von Nutzen, bei dem der Rand seines Reflektors 13 in die Konkavität der sichelförmigen Lichtöffnung des Fahrtrichtungsanzeigers hineinragen und der mit demselben eine gemeinsame Linie einer Streuscheibe 14 besitzen kann.

Der Kollimator des Gerätes kann aus einzelnen isolierten Spiegeln bestehen und eine Lichtöffnung komplizierter Form besitzen, beispielsweise können isolierte Zonen des Reflektors 2 von meridionalen Ebenen begrenzt sein. In Fig. 4, 5 ist ein Lichtsignalgerät jeweils im axialen Schnitt sowie in der Vorderansicht dargestellt, dessen Reflektor 2 aus drei Zonen eines Spiegelparaboloids besteht, die durch drei meridionalen Ebenen 15 voneinander getrennt sind, welche entlang der Achse OO' unter ein Vielfaches von 60° betragenden Winkeln einander schneiden. Die Zwischenräume zwischen den Zonen des Reflektors 2 und zwischen den Zonen der Lichtöffnung SS', die senkrecht zur Achse OO' gegenüber den Zonen des Reflektors 2 liegen und von einzelnen Abschnitten des Lichtfilters 6 verdeckt sind, sind als lichtabsorbierende Zonen 3 ausgeführt, wobei sie mit den Zonen des Reflektors 2 eine Oberfläche bilden, die die Lichtquelle 1 von der Seite her umfaßt, welche zur Lichtöffnung entgegengesetzt ist.

Der Strahl 8 der Lichtquelle 1 fällt auf den Reflektor 2 ein und wird durch die Lichtöffnung SS' hindurch ausgestrahlt. Die ins Innere des Gerätes eingedrungenen Außenbelichtungsstrahlen 10,11 fallen auf den Absorber 3 entweder unmittelbar oder aber nach der Reflexion von den Spiegelzonen 2 ein. Die Lichtöffnung (Fig. 5) besitzt die charakteristische Form des Zeichens "Vorsicht! Strahlung", was das mögliche Einsatzgebiet der beschriebenen Lichtsignaleinrichtung bedingt. Möglich sind auch andere informationell bedeutsame Lichtöffnungsformen, die für verschiedene Lichtanzeiger, beispielsweise Fußgängerverkehrsampeln, charakteristisch sind, wobei die Lage und Form der reflektierenden und lichtabsorbierenden Zonen im Innern des Gerätes mit der Form der Lichtöffnung SS' abgestimmt sein müssen.

In Fig. 6 ist ein Signalscheinwerfer mit einem klar abgebildeten Nutzstreuwinkel $\pm \xi$ dargestellt. Der Glühfaden 1 einer elektrischen Lampe 16 befindet sich im Brennpunkt F eines Facettenreflektors 2, der vorwiegend aus flachen Spiegeln mit einem Winkelmaß $\xi$ in bezug auf den Punkt F am paraboloidischen Grundkörper besteht. Die Brennebene verläuft vor dem Reflektor 2; der Umfassungswinkel des Reflektors 2 kann $180^{\circ}$ erreichen, wenn seine peripheren Spiegel 17 in der meridionalen Ebene das Profil einer Parabel 18 besitzen, deren Brennpunkt B an der Aperturgrenze des Reflektors 2 liegt, während die Achse BB' unter einem Winkel $\xi$ zur Achse OO' des Gerätes verläuft und diese vor der Lichtöffnung SS' dieses Gerätes schneidet. Der Absorber 3 besteht aus einem abgeschnittenen Kegel 19 mit einer Höhe H $\geqslant$ D/4 und einem Kegelwinkel $\xi$, dessen kleinerer Durchmesser an den Rand des Reflektors 2 anliegt, sowie einem Absorptionsbecher 20, der die Lichtquelle 1 mit einem Umfassungswinkel $180^{\circ}$ umfaßt. Der Durchmesser d des Bechers wird aus der Bedingung gewählt, daß die Gerade AC, die durch den den vorderen Rand des Kegels 19 und den (hinteren) Rand des Bechers verläuft, den Spiegel 2 unter einem Winkel zur Richtung (aus dem Schnittpunkt C heraus) auf den Brennpunkt F hin schneidet, welcher Winkel nicht kleiner als $\xi$ ist, wobei unter anderen ein Wert zulässig ist, der aus den folgenden Glei-

chungen ermittelt werden kann:

$$d = \frac{D \sin(\xi + 2\xi')}{[1 + \cos(\varphi - \xi - 2\xi')] \cos\varphi} \qquad , \qquad (2),$$

$$\varphi = \operatorname{arctg}\left(\frac{D-d}{2H} + \operatorname{tg}\xi\right) \qquad ,$$

wo $\xi' \leqslant \xi/2$ ist und die Winkelabweichung des Reflektors 2 vom Paraboloid bedeutet, die in der Umgebung des Punktes C als annehmbar gilt.

Die den Gleichungen (2) genügende Ausführungsform des Scheinwerfers, die zur Anwendung in den Straßenverkehrsampeln bestimmt ist, kann folgende Parameter besitzen: $\xi \approx 10^{0}$, $\xi' \approx 0$ (in der Umgebung des Punktes C ist der Spiegel streng parabolisch); H = D/3; d = D/5. Das Schutzglas 6, das gleichzeitig die Funktionen eines Lichtfilters erfüllt, besitzt eine Rotationsflächenform, die durch Drehen eines der Zweige einer Parabel 21(um die Rotationsachse OO' des Gerätes) entstanden ist, deren Achse AB entlang der Erzeugenden des Kegels 19 (unter einem Winkel $\xi$ zur Achse OO') verläuft, während der Brennpunkt A und der Pol B jeweils am vorderen und hinteren Rand desselben liegen. Das Schutzglas 6 tritt über den Vorderrand des Absorbers 3, der hier als ein Gehäuseteil betrachtet wird, nicht hinaus gemäß der Beziehung

$$H \geqslant \frac{D}{2} \cdot \frac{\cos\xi(1 + \sin\xi)}{2 - \sin\xi \cdot (1 + \sin\xi)} \qquad , \qquad (3)$$

was die mechanischen Eigenschaften des Gerätes verbessert. Das Schutzglas 6 kann eine einfachere, kegelige Form besitzen, was aber zur Vergrößerung der axialen Abmessungen des Gerätes und der Fresnel-Nutzstrahlungsverluste führt.

Das Gerät (Fig. 6) arbeitet auf die folgende Weise. Die auf den Reflektor 2 einfallenden Strahlen 8 der Quelle 1 werden in den informationell bedeutsamen Richtungen ausgestrahlt. Der Facettenreflektor 2 gewährleistet ein gleichmäßiges Leuchten über die Lichtöffnungsoberfläche in einer beliebigen Richtung innerhalb eines Bereiches $\pm\xi$. Die Außenbelichtungsstrahlen 10, die mit der Ach-

se OO' einen als $\xi$ kleineren Winkel bilden, werden vom Spiegel 2 auf die Oberfläche des Absorbers 3 gemäß der Gerätkonstruktion reflektiert. Die Außenstrahlen 11, die mit der Achse OO' einen als $\xi$ größeren Winkel bilden, werden entweder unter als größeren Winkeln zur Achse OO', d.h. außerhalb des Bereiches der informationell bedeutsamen Richtungen, reflektiert oder aber auch im Innern des Gerätes absorbiert. Ein apagogischer Beweis sieht so aus: abgenommen, eine Lichtstelle von einer externen Quelle tritt nach einer beliebigen Innenreflexionenzahl aus einem Spiegelpunkt unter einem als $\xi$ kleineren Winkel zur Achse OO' heraus; dann würde gemäß dem Umkehrbarkeitsprinzip, das für die optisch-geometrischen Strahlen gilt, der umgekehrte Strahl ebenfalls aus dem Gerät (zur externen Quelle hin) austreten, was aber der Konstruktion des **Gerätes** wiederspricht (der umgekehrte Strahl fällt auf den Absorber ein). Die durch externe Quellen bedingten Fresnel-Lichtstellen vom Schutzglas 6 gemäß Fig. 6 sind ebenfalls nur in den Richtungen möglich, die mit der Achse OO' einen als $\xi$ größeren Winkel bilden, weil die Richtungen 22, in denen das Schutzglas 6 informationell bedeutsam reflektiert, vom Absorber 19 verdeckt sind.

Das Gerät gemäß Fig. 6 gewährleistet bei relativ geringen axialen Abmessungen einen (für die Antiphantom-Geräte) höchsten Wirkungsgrad (bis zu 50%) sowie die Beseitigung des Phantom-Effektes in einem streng begrenzten Bereich der informationell bedeutsamen Richtungen. Ein vorzugsweises Einsatzgebiet desselben sind Lichtsignale mittlerer und großer Reichweite.

Der Kollimator des Lichtsignalgerätes, der in den im vorstehenden beschriebenen Varianten (Fig. 1 bis 6) einen Spiegelreflektor 2 darstellte, d.h. durch Auftragen eines undurchsichtigen metallischen Überzuges auf die optisch glatte Oberfläche herstellt wurde, kann in Gestalt eines katadioptrischen Reflektors ausgeführt, und zwar aus einem transparenten Werkstoff beliebiger Farbe in Form von prismatischen Elementen mit Totalreflexion hergestellt sein. Diese Ausführung schließt den Bedarf an einer Spiegelschicht aus und erteilt diesem Reflektor die Funktion eines Lichtfilters (durch dessen Herstellung aus einem in der Farbe des jeweiligen Signals gefärbten Werkstoff), außerdem gestattet der katadioptrische Reflektor, die Außenbelichtungshelligkeit unter großen Winkeln zur Gerätachse zu vermindern. Dies wird dadurch möglich, weil die Totalreflexion im Gegensatz zur Spiegelreflexion nur im begrenzten Winkelbereich stattfindet, und die auf die reflektierende Oberfläche unter einem als der Grenzwinkel kleineren Winkel einfallenden Strahlen leuchten ohne Reflexion durch dieselbe hindurch und können von einem hinter dem katadioptrischen Reflektor angeordneten zusätzlichen Absorber absorbiert werden.

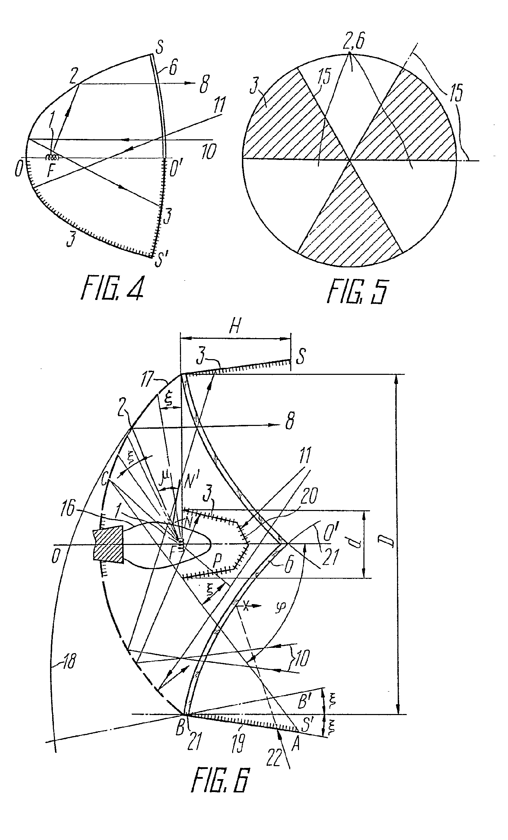

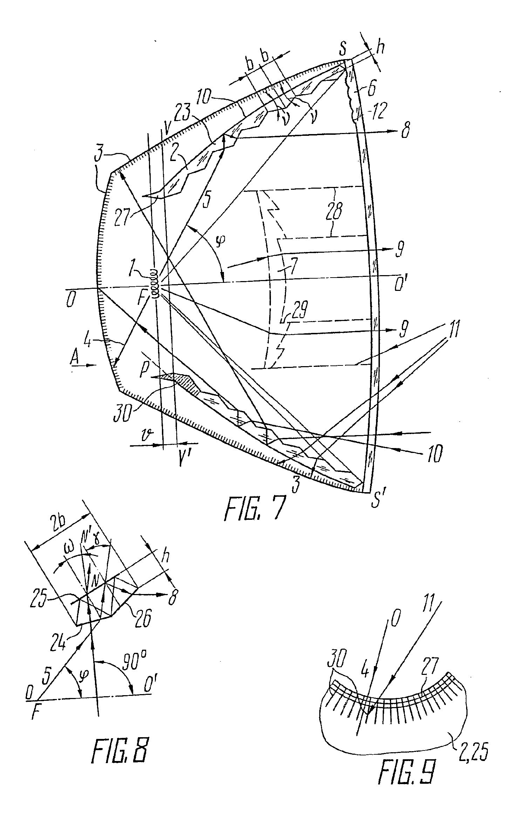

Das Gerät gemäß Fig. 7 besteht aus einer Lichtquelle 1, die sich im Brennpunkt F auf der Achse OO' des Gerätes befindet, einem katadioptrischen Reflektor 2, der eine Totalreflexion der Brennstrahlen auf die Austrittsöffnung SS' gewährleistet, und einem Lichtstrahlenabsorber 3, der an der Innenfläche des Gerätgehäuses ausgeführt ist und sowohl die Quelle 1 wie auch den Reflektor 2 von der Seite her umfaßt, die zur Austrittsöffnung SS' entgegengesetzt ist. Der Reflektor 2 besteht aus in bezug auf die Achse OO' rundsymmetrischen katadioptrischen Ringen 23, die an einer gemeinsamen Tragschicht ausgeführt sind, welche sich in Richtung der Lichtöffnung SS' hin verbreitert. Jeder Ring 23 besitzt das Profil eines Prismenkeils (Fig.8), das eine lichtbrechende Eintrittsfläche 24, eine Totalreflexionsfläche 25 und eine lichtbrechende Austrittsfläche 26 besitzt. Die Flächen 24, 26 sind an der inneren, die Flächen 25 aber an der äußeren Tragschichtoberfläche ausgeführt. Auf der Seite seines schmaleren Teiles weist der Reflektor 2 (genauer sein Arbeitsbereich) eine blinde Öffnung auf, deren Ebene VV' in der Brennebene des Kollimators bzw. etwas vor derselben, in einem Abstand V von ihr liegt. Somit ist die gesamte lichtreflektierende Oberfläche des Kollimators vor dessen Brennebene angeordnet.

Das Profil eines jeden Ringes 23 entspricht der in Fig. 8 erläuterten Bedingung: die Normale NN'zur Fläche 25 des Ringes 23 soll einen als der Totalreflexionsgrenzwinkel nicht kleineren Winkel $\gamma$ mit dem Brennstrahl 5 (d.h. dem Strahl der Quelle 1 nach dessen Brechen durch die Fläche 24) sowie einen als der Grenzwinkel kleineren Winkel $\omega$ mit dem Strahl betragen, der zwei diametral entgegengesetzte Punkte an der reflektierenden Oberfläche des Ringes 23 (auch unter Beachtung des Richtungswechsels an den lichtbrechenden Flächen) verbindet, und zwar gemäß der Beziehung

$$\omega < \arcsin \frac{1}{n} \leqslant \gamma \qquad , \qquad (4)$$

wo n den Brechungsindex des Werkstoffes des katadioptrischen Ringes 23 bedeutet.

Für die zur Ebene der blinden Öffnung nahen Ringe 23 bedeutet dies bei $\upsilon \longrightarrow 0$, $\omega \longrightarrow \gamma$, daß zumindest die zur Brennebene nehen Zonen des Reflektors 2 für eine Funktion unter dem Grenztotalreflexionswinkel ausgelegt sein sollen.

Die Erfüllung der Bedingung (4) schließt zumindest für die meridionalen Strahlen die Möglichkeit einer zweifachen Reflexion vom Reflektor 2 aus, die einfache Reflexion der Außenbelichtungsstrahlen führt aber zum Einfallen derselben auf den Absorber 3 in der Zone der blinden Öffnung bzw. in einer Zone, die den Reflektor 2 umfaßt. Der katadioptrische Reflektor 2 des Gerätes von Fig. 7 ist auf der paraboloidischen Tragschicht mit der durch die Ebene VV' abgeschnittenen Spitze ausgeführt, welche Tragschicht mit dem Kollimator achsgleich und konfokal liegt. Die lichtbrechenden Flächen 24 und 26 bilden mit der reflektierenden Oberfläche, die ein paraboloidisches Profil aufweist, einen gleichen Winkel $\nu$, der für die von der Brennebene entfernt liegenden Ringe 23 gemäß der Beziehung (4) in recht weiten Grenzen gewählt werden kann. Der maximale Wert

$$\nu = \operatorname{arctg} \frac{1 - \cos \varphi/2}{\sqrt{n^2 - 1} - \sin \varphi/2} \qquad , \qquad (5)$$

- 21 -

wo $\varphi$ den Winkel zwischen dem auf den katadioptrischen Ring 23 einfallenden Brennstrahl 23 und der Achse OO' bedeutet, entspricht dem Grenztotalreflexionswinkel für alle Brennstrahlen, wobei dieser Wert $\nu$ für die Unterdrückung der Außenbelichtung optimal ist, aber mit erheblichen Verlusten der Nutzstrahlung zwischen den benachbarten Eintrittsflächen zusammenhängt. Optimal ist die Variante, bei der

$$\nu = \text{arctg } \frac{1 - \cos\lambda}{\sqrt{n^2 - 1} - \sin\lambda} \qquad (\lambda = 45° - \text{arctg } \frac{1 - \sin\varphi}{2 - \cos\varphi}), \tag{6}$$

und die Strahlen, die in der Nähe des hinteren Randes des Reflektors 2, genauer durch den Schnittpunkt P der Parabel des Reflektors 2 mit deren Brennebene verlaufen, unter einem Grenzwinkel reflektiert werden. In diesem Fall erfährt kein von der entgegengesetzten Seite des Reflektors 2 kommender Strahl eine Totalreflexion.

Die Breite der Flächen 24, 26 verschiedener katadioptrischer Ringe 23 ist bei gleichbleibender Stärke der Tragschicht des Reflektors 2 unterschiedlich (dies ist für Übereinstimmung der Aperturen der Flächen 24, 25 und 26 notwendig) und wird mit Hilfe folgender Formeln berechnet:

$$b = \frac{2 \text{ tg }\gamma}{1 - \text{tg }\gamma \text{ tg }\nu} \cdot h \quad , \tag{7}$$

$$\gamma = \nu + \text{arcsin } \frac{\cos(\varphi/2 + \nu)}{n} \quad , \tag{8}$$

wo es bedeutet:

b - Halbwertsbreite des katadioptrischen Ringes;

h - Stärke der Tragschicht des Reflektors.

Zur Beseitigung der Lichtstellen von der passiven hinteren Stirnfläche der Tragschicht des Reflektors 2 ist das Profil dieser Stirnfläche in Gestalt eines spitzwinkligen Keiles 27 ausgeführt, dessen Flächen mit der Achse OO' einen Winkel in der Größenordnung von 25° und weniger bilden.

- 22 -

Der Kollimator des Gerätes kann eine Sammellinse 7 einschließen, die die blinde Öffnung des Reflektors 2 verdeckt und ins Innere desselben eingetieft ist. Ein zylindrischer Absorber 28, der gleichachsig zum Kollimator vor der Linse 7 (es können mehrere, ineinander eingebaute Absorber vorhanden sein) angeordnet ist, unterdrückt, ohne die Nutzstrahlen von dem Kollimator zu verdecken, die Lichtstellen von der Fresnel-Weitwinkellinse 7. Beim Vorhandensein der Fresnel-Ringe der Linse 7 an der Vorderseite der Tragschicht müssen die Verbindungsflächen 29 dieser Ringe parallel zur Achse OO′ liegen. Diese Ausführung der Linse 7 schließt die Lichtstellen von den Verbindungsflächen 29 zumindest in der axialen Richtung aus.

Die Austrittsöffnung des Kollimators ist vom Schutzglas 6 verdeckt, das farblos sein kann, wenn der Reflektor 2 und die Linse 7 aus einem gemäß der Signalfarbe gefärbten Werkstoff gefertigt sind. Das Schutzglas 6 kann Streuelemente 12 enthalten.

Das Gerät gemäß Fig. 7, 8 arbeitet auf die folgende Weise. Die Strahlen 5 von der Lichtquelle 1, die auf die Eintrittsflächen 24 der katadioptrischen Ringe 23 einfallen, werden gebrochen und fallen auf die Fläche 25 unter einem Winkel $\gamma$ ein, der der Beziehung (4) entspricht, werden vollständig reflektiert und, nachdem sie an der Austrittsfläche 26 gebrochen worden sind, in Form von Strahlen 8 durch das Glas 6 hindurch entlang der Achse OO′ ausgestrahlt. Einen kleineren Teil des Kollimatorlichtstromes machen die von der Quelle 1 kommenden Strahlen 9 aus, die von der Linse 7 gebrochen werden. Die Außenbelichtungsstrahlen 10, die mit der Achse OO′ einen kleinen Winkel bilden, fallen, nachdem sie vom Reflektor 2 reflektiert bzw. von der Linse 7 gebrochen worden sind, durch die blinde Öffnung des Reflektors 2 hindurch auf den zentralen Teil des Absorbers 3 ein. Die die Achse OO′ unter einem großen Winkel schneidenden Außenbelichtungsstrahlen 11 leuchten, nachdem sie nicht mehr als eine einzige Reflexion erfahren haben, durch die reflektierende Oberfläche (Flächen 25) gemäß der Beziehung (4) hindurch und werden von der den Reflektor 2 umfassenden Zone des Absorbers 3 absorbiert. Beim Vorhandensein des zylindrischen Absorbers 28 wird ein Teil der Strahlen 11 von demselben absorbiert.

Wenn der Außenstrahl 11 nicht in der meridionalen Ebene liegt, so kann er je nach dem Abweichungsgrad von derselben sowie der Größe des Winkels $\gamma_0$ an den Fallstellen des Strahles auf den Reflektor 2 und je nach der Krümmung des katadioptrischen Ringes 23 mehr als eine Reflexion erfahren und durch die Lichtöffnung SS' hindurch unter einem bestimmten Winkel zur Ausstrahlungsachse OO' austreten. Solche Strahlen werden meist von den meridionalen Absorptionsplatten unterdrückt. Anstatt der Platten als einzelne Bestandteile des Gerätes können in der Konstruktion des katadioptrischen Reflektors 2 (und anderen aus transparentem Werkstoff bestehenden Kollimatorelementen, bei denen der Brennstrahl die Ebene der Achse OO' nicht verläßt) meridionale Schlitze 30 vorgesehen sein, welche mit einem schwarzen Farbstoff gefüllt sind, wie dies in Fig. 9 dargestellt ist, wo der Reflektor 2 des Gerätes gemäß Fig. 7 von der der blinden Öffnung her gezeigt ist. Der Farbstoff soll in optischem Kontakt mit dem Werkstoff des Reflektors 2 stehen, d.h. die Totalreflexion von der Innenfläche des Schlitzes (da dieser sonst nur Schaden und keinen Nutzen bringt) verhindern.

Der Einfluß der außermeridionalen Außenbelichtungsstrahlen auf den Signalkontrast ist sehr gering, sofern $\gamma_0 \longrightarrow \arcsin \frac{1}{n}$ für alle katadioptrischen Ringe 23 des Reflektors 2 gilt.

In den Kollimatoren von Fig. 10, 11 besitzt der Reflektor 2 die Form eines abgeschnittenen Kegels mit einem Kegelwinkel $\psi$ und ist durch eine der Brennebene vorgelagerte ringförmige Sammellinse 31 vervollständigt, deren Durchmesser den Durchmesser der im Reflektor 2 (im schmaleren Kegelteil) vorhandenen blinden Öffnung nicht übersteigt. Die Achse FE des Profils der Linse 31 verläuft durch einen gemeinsamen Brennpunkt F des Kollimators und dieser Linse unter einem Winkel $\varphi$ zur Achse OO' des Kollimators, der $90^\circ$

nicht übersteigt, und schneidet den Reflektor 2. Parallel zu dieser Achse verlaufen sämtliche aus dem Punkt F austretenden und von der Linse 31 gebrochenen Strahlen 5, wodurch verschiedene katadioptrische Ringe 23 des Reflektors 2 ein gleiches (Fig. 10) bzw. ein ähnliches (Fig. 11) Profil besitzen können, das dem rechten Grenzwert der Formel (4) entspricht, da hier die Beziehung

$$\operatorname{tg} \nu = \frac{1 - \cos(\varphi - \psi)}{\sqrt{n^2 - 1} - \sin(\varphi - \psi)} \quad , \tag{9}$$

gilt, wo es bedeutet:

$\nu$ — Winkel zwischen der Eintrittsfläche und der reflektierenden Fläche jeses Ringes;

n — Brechungsindex des Werkstoffes des Reflektors 2.

Der Reflektor des Kollimators von Fig. 10 besitzt eine gleichbleibende Stärke h der Tragschicht, $\varphi = 2\psi$, wobei ein Fall von besonderem Interesse ist, wenn

$$\psi = 2\nu = \arcsin \frac{\sqrt{n^2 - 1}}{2} \quad , \tag{10}$$

und die Verluste der unmittelbar auf die Austrittsfläche 26 einfallenden Strahlen 32 der Lichtquelle 1 durch deren Fresnel-Reflexion unter großen Winkeln von den Flächen 26 und 24 in Richtung der Kollimatorachse OO' teilweise kompensiert werden, so insbesondere für $n = 1,5$; $\psi = 34^\circ$.

Im Kollimator von Fig. 11 sind dank dem Verzicht auf die gleichbleibende Stärke der Tragschicht die Lichtstromverluste zwischen den benachbarten katadioptrischen Ringen 23 beseitigt, da die Flächen 26 in diesem Fall zur Achse des Profils der Linse 31 parallel sind; dabei gilt

$$\psi = \arcsin \frac{\cos \varphi}{n} - \arcsin \frac{1}{n} + \varphi \quad . \tag{11}$$

Eine einzelne Variante der Kollimatorausführung gemäß Fig. 11 besitzt folgende Parameter: $n = 1,5$; $\varphi = 70^\circ$; $\psi = 41,4^\circ$; $\nu - 10,8^\circ$; $\nu' = 28,6^\circ$ ($\nu$ und $\nu'$ sind

0299091

Winkel, die die Fläche 25 mit den jeweiligen Flächen 24 und 26 bildet), wobei der Winkel zwischen der reflektierenden Oberfläche und der Tangente zur vorderen Oberfläche des Reflektors 2 (keilförmige Tragschicht) $\delta = 8,5°$ beträgt.

Die blinde Öffnung des kegeligen Reflektors 2, deren Rand praktisch am Innenrand der Austrittsfläche 26 des von der Brennebene her ersten katadioptrischen Ringes 23 (Fig. 11) liegt, kann durch einen zusätzlichen Absorber bzw. eine Sammellinse 7 verdeckt werden. Die Linse 7 kann mit dem farblosen Streuer 6 bei einem farblosen Reflektor 2 vereinigt werden, und die erforderliche Signalfarbe wird durch die Verwendung eines Lichtfilters 33 in Gestalt einer die Lichtquelle 1 von vorn umfassenden Kappe erreicht. In der Einrichtung von Fig.10 ist die ringförmige Linse 31 mit der Seitenfläche des Lichtfilters 33 vereinigt.

Die Anwendung einer ringförmigen Linse 31 mit einem kegeligen Reflektor 2 vereinfacht die Fertigung des für die Herstellung des Reflektors 2 erforderlichen Preßwerkzeuges und ermöglicht eine Erhöhung des Wirkungsgrades des von der Lichtquelle 1 kommenden Lichtstromes bei begrenzten axialen Abmessungen des Gerätes.

Das Schema von Fig. 7 ist vorzugsweise für Lichtsignale mittlerer und großer Reichweite bestimmt; die Schemas von Fig. 10 und 11 sind vorzugsweise in den Verkehrssignallichtern angewendet.

Zur Vermeidung eines axialen Phantom-Effektes seitens des Glaskolbens der jeweiligen elektrischen Lichtquelle soll man bei jedem Kollimator große Kolbenabmessungen mit einer von der sphärischen (mit dem Glühfaden in der Sphärenmitte) maximal verschiedenen Form anstreben. Die Normale NN' zur Glaskolbenoberfläche, die in den Schnittstellen derselben durch die auf die effektivsten Reflektorzonen einfallenden Brennstrahlen aufgestellt ist, muß unter einem maximalen Winkel $\mu$ (siehe Fig. 6) zu diesen Strahlen verlaufen, der garantiert größer als der Betrag $\xi/12$ ist, wo $\xi$ den Nutzstremwinkel des Gerätes bedeutet.

0299091

## Industrielle Anwendbarkeit

Die vorliegende Erfindung kann in Lichtsignalgeräten gerichteter Wirkung angewendet werden, die unter Bedingungen einer Außenbelichtung (Sonnen- und Himmelslicht sowie von sonstigen Quellen) funktionieren, d.h. in den Verkehrssignallichtern, beispielsweise in Kfz-Fahrtrichtungsanzeigern und Bremslichtern, sowie in Verkehrsampeln und Eisenbahnlichtsignalen.

## PATENTANSPRÜCHE

1. Lichtsignalgerät, das einen Kollimator mit einem Reflektor (2), eine im Brennpunkt (F) des Kollimators befindliche Lichtquelle (1) sowie einen Lichtstrahlenabsorber (3) enthält, dadurch g e k e n n z e i c h n e t, daß die Oberfläche des Absorbers (3) einen Teil von Brennstrahlen (4) des Kollimators schneidet, wobei der Reflektor (2) und der Absorber (3) auf eine solche Weise relativ zueinander angeordnet sind, daß jeder Brennstrahl (4), der entgegengesetzt zu einem auf den Reflektor (2) einfallenden Brennstrahl (5) gerichtet ist, auf den Absorber (3) einfällt.

2. Lichtsignalgerät nach Anspruch 1, dadurch g e - k e n n z e i c h n e t, daß der Reflektor (2) in Gestalt eines Konkavspiegels ausgeführt ist, wobei der Spiegel und der Absorber (3) eine Oberfläche bilden, die die Lichtquelle (1) von der zur Lichtöffnung SS' des Gerätes entgegengesetzten Seite her umfaßt.

3. Lichtsignalgerät nach Anspruch 2, dadurch g e - k e n n z e i c h n e t, daß der Konkavspiegel durch eine Lichtöffnung (SS') des Gerätes und eine Ebene (VV') begrenzt ist, die die Achse (OO') des Kollimators vor dessen Brennpunkt (F) unter einem beliebig gewählten Winkel ($\alpha$) schneidet, wobei zumindest der an die Ebene (VV') anschließende Spiegelteil ein mit dem Kollimator konfokales parabolisches Profil besitzt, während die Ebene (VV') vom Brennpunkt (F) in einem Abstand ( V) liegt, der nach einer folgenden Formel berechnet wird:

$$V = g \cdot \sin \xi ,$$

wo es bedeutet:

V - Abstand zwischen dem Brennpunkt (F) und der Ebene (VV');

g - maximaler Abstand vom Brennpunkt (F) bis zu der die Oberflächen des Spiegels und des Absorbers (3) trennenden Linie;

$\xi$ - Nutzstreuwinkel des Gerätes.

4. Lichtsignalgerät nach Anspruch 3, dadurch g e - k e n n z e i c h n e t, daß die Ebene (VV') die Lichtöffnung (SS') des Gerätes schneidet, wobei der vordere Teil des Absorbers (3) in Richtung der reflektierenden Oberfläche des Spiegels konkav ist und die Innenfläche des Absorbers (3) von der Seite der Lichtöffnung (SS') her verdeckt.

5. Lichtsignalgerät nach Anspruch 2, dadurch g e - k e n n z e i c h n e t, daß der Spiegel aus durch Abschnitte des Absorbers (3) getrennten Teilen besteht, deren Oberflächen durch die Lichtöffnung (SS') des Gerätes und meridionale Ebenen (15) begrenzt sind.

6. Lichtsignalgerät nach Anspruch 1, dadurch g e - k e n n z e i c h n e t, daß der Reflektor (2) in Gestalt eines hinter der Brennebene des Kollimators liegenden Konkavspiegels ausgeführt ist, während der Absorber (3) aus zwei einzelnen Teilen besteht: einem Außenteil (19), der die Form einer abgeschnittenen kegeligen Fläche besitzt, welche an den Vorderrand des Reflektors (2) anschließt und sich gegen die Lichtöffnung (SS') des Gerätes hin unter einem den Nutzstreuwinkel ( $\xi$ ) nicht übersteigenden Winkel verbreitert, sowie einem Innenteil (20), der die Form eines die Lichtquelle (1) von der Seite der Lichtöffnung (SS') des Gerätes her umfassenden Bechers besitzt.

7. Lichtsignalgerät nach Anspruch 6, dadurch g e - k e n n z e i c h n e t, daß die Austrittsöffnung des Kollimators durch ein Schutzglas - ein Lichtfilter (6) - verdeckt ist, dessen Oberfläche durch Rotation eines Zweiges einer Parabel (21) um die Achse (OO') des Gerätes gebildet ist, wobei die Achse (AB) der Parabel (21) über die Erzeugende des kegeligen Teiles (19) des Absorbers (3) verläuft, während der Brennpunkt (A) und der Pol (B) der Parabel (21) jeweils am vorderen bzw. hinteren Rand des kegeligen Absorbers (19) liegen.

8. Lichtsignalgerät nach Anspruch 1, dadurch g e - k e n n z e i c h n e t, daß der Reflektor (2) aus einem transparenten Werkstoff in Form einer Totalreflexionsfläche ausgeführt ist, wobei die Oberfläche des Absorbers (3) die Lichtquelle (1) und die reflektierende Oberfläche von der zur Lichtöffnung (SS') entgegengesetzten Seite her umfaßt.

9. Lichtsignalgerät nach Anspruch 8, dadurch g e - k e n n z e i c h n e t, daß der Reflektor (2) in Gestalt von katadioptrischen Ringen (23) ausgeführt ist, von denen ein jeder das Profil eines Prismenkeils besitzt, das eine lichtbrechende Eintrittsfläche (24), eine Brennstrahl- -Totalreflexionsfläche (25) und eine lichtbrechende Austrittsfläche (26) einschließt, wobei die Ringe (23) der Brennebene vorgelagert sind und ein solches Profil haben, daß der zwei diametral entgegengesetzte Punkte der reflektierenden Oberfläche eines jeden Ringes (23) verbindende optisch-geometrische Strahl diese Oberfläche unter einem Winkel ($\omega$) schneidet, der kleiner als der Totalreflexionswinkel ist.

10. Lichtsignalgerät nach Anspruch 9, dadurch g e - k e n n z e i c h n e t, daß die katadioptrischen Ringe (23) auf einer paraboloidischen Tragschicht ausgeführt sind, wobei die reflektierende Oberfläche eines jeden Ringes (23) mit dessen Eintrittsfläche (24) und Austrittsfläche (26) einen Winkel ( $\nu$ ) bildet, der nach folgenden Formeln berechnet wird:

$$\nu = \text{arctg}\left( \frac{1 - \cos \lambda}{\sqrt{n^2 - 1} - \sin \lambda} \right) ,$$

$$\lambda = 45° - \text{arctg} \frac{1 - \sin \varphi}{2 - \cos \varphi} ,$$

wo $\varphi$ den Winkel zwischen der Kollimatorachse und dem auf diesen Ring (23) einfallenden Brennstrahl (5) bedeutet.

11. Lichtsignalgerät nach Anspruch 9, dadurch g e - k e n n z e i c h n e t, daß der Kollimator eine der Brennebene vorgelagerte ringförmige Sammellinse (31) einschließt, deren Kreissymmetrieachse über die Achse (OO') des Kollimators verläuft, wobei die optische Achse (FE) ihres Profils durch den gemeinsamen Brennpunkt (F) des Kollimators und dieser Linse (31) unter einem spitzen Winkel ( $\varphi$ ) zur Achse (OO') des Kollimators geht, die Ausgangsapertur der Linse (31) mit der Eingangsapertur des Reflektors (2) übereinstimmt, dessen katadioptrische Ringe (23) auf einer kegeligen Tragschicht ausgeführt sind, die sich gegen die Austrittsöffnung (SS´) des Kollimators hin verbreitert und eine blinde Öffnung aufweist, deren Durchmesser nicht kleiner als der maximale Durchmesser der ringförmigen Linse (31) ist, während der Winkel ( $\nu$ ) zwischen der reflektierenden Oberfläche und den Eintrittsflächen (24) der katadioptrischen Ringe (23) nach einer folgenden Formel gewählt wird:

$$\text{tg } \nu = \frac{1 - \cos(\varphi - \psi)}{\sqrt{n^2 - 1} - \sin(\varphi - \psi)} \quad ,$$

wo es bedeutet:

$\psi$ - Kegelwinkel der reflektirerenden Oberfläche;

$\varphi$ - Winkel zwischen der Achse (OO´) des Kollimators und der optischen Achse (FE) des Profils der ringförmigen Linse (31);

n - Brechungsindex des Werkstoffes des Reflektors (2).

12. Lichtsignalgerät nach Ansprüchen 10, 11 dadurch g e k e n n z e i c h n e t , daß die blinde Öffnung des Reflektors (2) von der Seite der Austrittsöffnung (SS´) des Kollimators her durch eine scheibenförmige Sammellinse (7) verdeckt ist, bei der die Verbindungsfläche(29) der Fresnel-Ringe zur Achse (OO´) des Kollimators parallel sind.

13. Lichtsignalgerät nach Ansprüchen 10, 11, 12, dadurch g e k e n n z e i c h n e t , daß die aus einem transparenten Werkstoff hergestellten Kollimatorteile meridionale Schlitze (30) aufweisen, die mit einem schwarzen Farbstoff gefüllt sind.

14. Lichtsignalgerät nach Anspruch 11, dadurch g e k e n n z e i c h n e t , daß der Kegelwinkel ( $\psi$ ) der reflektierenden Oberfläche des Reflektors (2) zweimal so klein wie der Winkel ( $\varphi$ ) zwischen der Achse (OO´) des Kollimators und der optischen Achse (FE) des Profils der ringförmigen Linse (31) sowie zweimal so groß wie der Winkel ( $\nu$ ) zwischen der reflektierenden Oberfläche und den lichtbrechenden Flächen (24, 26) der katadioptrischen Ringe (23) ist.

0299091

15. Lichtsignalgerät nach Anspruch 11, dadurch g e-
k e n n z e i c h n e t, daß die Austrittsflächen (26)
der katadioptrischen Ringe (23) des Reflektors (2) zur optischen Achse (FE) des Profils der ringförmigen Linse (31)
parallel sind, wobei die Stärke der Tragschicht des Reflektors (2) und die Breite der lichtbrechenden Flächen
(24, 26) der katadioptrischen Ringe (23) gegen die Austrittsöffnung des Kollimators hin abnehmen.

FIG. 1

FIG. 2

FIG. 3

FIG. 4

FIG. 5

FIG. 6

FIG. 7

FIG. 8

FIG. 9

FIG. 10

FIG. 11

# INTERNATIONAL SEARCH REPORT

International Application No PCT/SU 88/00007

**I. CLASSIFICATION OF SUBJECT MATTER** (if several classification symbols apply, indicate all) [6]

According to International Patent Classification (IPC) or to both National Classification and IPC

$IPC^4$: G 08 G 1/095

**II. FIELDS SEARCHED**

| Minimum Documentation Searched [7] | |
|---|---|
| Classification System | Classification Symbols |
| $IPC^4$ | G 08 G 1/095, F 21 M 3/08; F 21 V 7/06 |

Documentation Searched other than Minimum Documentation
to the Extent that such Documents are Included in the Fields Searched [8]

**III. DOCUMENTS CONSIDERED TO BE RELEVANT [9]**

| Category [*] | Citation of Document, [11] with indication, where appropriate, of the relevant passages [12] | Relevant to Claim No. [13] |
|---|---|---|
| A | AT, B, 362686, (GESIG GESELLSCHAFT FÜR SIGNALANLAGEN GESELLSCHAFT M.B.H.), 10 June 1981 (10.06.81), see figures 1,2, the claims | 1-15 |
| A | DE, C3, 1951199, (Pintsch Bamag Antriebs- und Verkehrstechnik GmbH), 2 August 1973 (02.08.73), see figure 2, the claims | 1-15 |
| A | FR, A1, 2169183, (N.V. PHILIPS' GLOEILAMPEN-FABRIEKEN), 7 September 1973 (07.09.73), see figure 2, the claims | 1-15 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 30 March 1988 (30.03.88) | 28 April 1988 (28.04.88) |
| International Searching Authority | Signature of Authorized Officer |
| ISA/SU | |

Form PCT/ISA/210 (second sheet) (January 1985)